# EUROPEAN PATENT SPECIFICATION

(11) **EP 3 397 409 B1**
(45) Date of publication and mention of the grant of the patent: **27.09.2023**
(21) Application number: 16836110.3
(22) Date of filing: 28.12.2016
(51) Int. Cl.: B21D 51/32, F16C 13/00, F16J 15/447

(54) **IMPROVED ROLLING SEAMER**
VERBESSERTE ROLLENDE FALZMASCHINE
SERTISSEUSE À ROULEAU AMÉLIORÉE

(30) Priority: 30.12.2015 IT UB20159812
(43) Date of publication of application: 07.11.2018
(73) Proprietor: Lyra Bearing S.r.l., 35010 Vigonza (PD) (IT)
(72) Inventor: BERIZZI, Andrea, 35010 Vigonza (PD) (IT)
(74) Representative: Citron, Massimiliano
(86) International application number: PCT/IB2016/058031
(87) International publication number: WO 2017/115285

(56) References cited:
- EP-A1- 0 322 843
- WO-A1-2015/037677
- DE-A1-102014 204 334
- JP-A- 2002 081 452
- US-A1- 2002 126 926

## Description

The invention relates to an improved rotary head to produce cans or jars (called technically *seamer*), and to the machine containing the head.

The seamer of a can packaging machine serves to fix through seaming the lid of the can to the cylinder that forms the body thereof. For the purpose, a peripherally-shaped idle roller is used to bend and hammer down one on the other the edges of the sheet to be welded, see e.g. EP 0322843 or fig. 1. From EP 0 322 843 there is known a rolling seamer comprising a seaming roller mounted on a bearing comprising two concentric rings relatively rotatable on rolling elements,

Since the quality of the sealing depends on the length, thickness and extent of the overlap between these edges, it is crucial that the seamer for long preserves his bending capability despite very strong stresses it is subjected to. Not only it spins at about 2000 rpm, but the force to be applied to the lid puts a strain on the internal components.

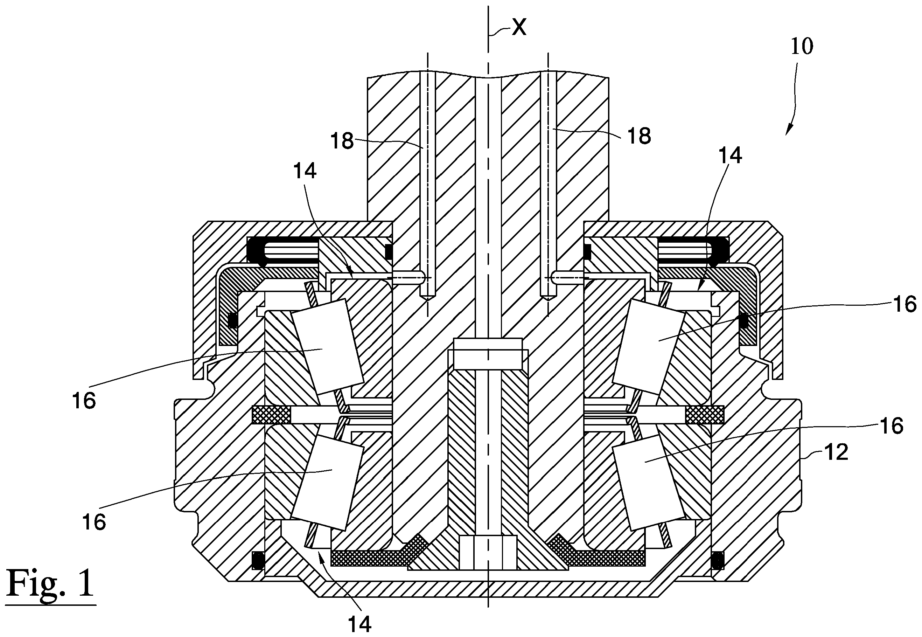

Fig. 1 shows the typical structure of a seamer 10, which comprises a seaming roller 12 mounted idle about an axis X on a bearing formed by two superposed bearings 14 with rollers 16.

The operating life of the bearings 14 decides that of the seamer 10, because small mechanical instability in the bearings 14 entail vibrations on the roller 12 and seaming defects. The roller 12 lasts more than the bearings 14, thus to extend the operational life of the seamer 10 it should be unmounted and replaced.

Another problem is the lubrication of the bearings 14, necessary to dissipate the high heat generated by the rotation of the roller 12 and induced by the operating temperatures, which arrive for food items up to 120-130 °C. For the manual lubrication of the seamer 10 long and expensive machine stops are needed, and the introduction of the new grease involves the leakage of the old one, with consequent danger of spoiling the next can to be closed. Or - as in the seamer 10 - the bearings 14 operate oil-immersed thanks to oil ducts 18 supplied by an oil circulation circuit (not shown) external to the seamer 10. The circulation circuit greatly increases the cost and the complexity of the seamer 10, and sets very tight constraints to the sealing gaskets, because in the food industry even the slightest leak should be avoided. To ensure oilproofness it is necessary to use static and dynamic seals, which, however, increase rotational frictional forces for the seamer. If the seamer's angular velocity decreases, there might be slipping on the can to be closed, and this reduces the quality of seaming.

To improve this state of the art and obviate at least one of these problems is the main object of the invention.

Another object is to obtain a seamer that is simple to construct, inexpensive and reliable.

Another object is to obtain a seamer that rotates idle with low friction, so as to improve the seaming processing.

One or more objects are achieved by what is defined in the appended claims, in which the dependent ones define advantageous variants.

A first aspect of the invention relates to a rolling seamer for seaming machine of cans or jars. The rolling seamer comprises
a seaming roller mounted (idle) on a bearing comprising two concentric rings relatively rotatable on rolling elements,
a cover integral with the seaming roller to watertightly enclose one side of the bearing,
a gasket mounted on the concentric rings for keeping watertight one side of the bearing opposite to the one closest to the cover,

lubricating fluid, for the rolling elements, permanently maintained between the cover and the gasket.

Between the two rings, advantageously an annular space is delimited that the cover and the gasket then enclose watertightly. In this annular space, during the production of the bearing, lubricant is deposited (e.g. grease), which will ensure for the whole life of the seamer the necessary lubrication, without leaking or maintenance for greasing. Moreover, the particular arrangement of the gasket and the cover ensures very low rotational friction for the seamer, and therefore a final high quality of the seamed product, and allows the use of grease and not oil.

Note that in a preferred construction of the seamer said gasket and said cover constitute in the seamer the only watertighting means for the containment of the lubricating fluid of the rolling elements.

In particular it is preferred that said gasket comprises or consists of a labyrinth seal, which has excellent sealing and friction performances.

Preferably, said gasket is placed (i) astride (like a bridge) two adjacent edges of the rings, and (ii) outside of the annular space comprised between the two rings. Thus the annular space is not encumbered by the gasket and greater is the amount of lubricant which can be deposited inside the annular space.

Preferably, said gasket comprises or is constituted by two parts which are relatively movable and integral, respectively, with one ring. This solution minimizes friction, possibly limiting it to rubbing between parts of the gasket but not against the rings.

The labyrinth seal prevents the lubricant to leak and any external product (steam or other liquids or solids) from entering the bearing thereby ruining it. Furthermore, the labyrinth seal ensures a very low friction to the rotation of the seamer.

The labyrinth seal is preferably constituted by a pack of interdigitated lamellae, wherein a subset of the lamellae is integral with one ring and the remaining ones with the other ring.

For said gasket, seals of different type could be mounted, however with increased friction.

Preferably, the bearing is constituted by or comprises
two circular rings having (i) different diameter to delimit an annular space between them, and (ii) center on a common axis, and
two crowns of balls (e.g. spheres) placed in the annular space in contact with the rings,
the crowns having the center on the common axis and lying on distinct planes parallel to each other and orthogonal to the axis.

The advantage of this configuration is that the seamer is very stable, and easily allows to use grease and not oil. The use of the spheres allows to reduce the rolling friction.

Note that the above configuration of the bearing entails advantages regardless of the presence of said gasket, and alone could improve a seamer.

Preferably, the annular space contains or is filled with grease, particularly alimentary grease. The adoption of grease, denser than oil, facilitates the containment of the lubricant inside the seamer in order to prevent leakage. Also the grease allows to eliminate lubrication maintenance during the life of the bearing.

The seamer may comprise in addition to the gasket, other optional watertight-closure elements, which e.g. comprise or consist of lips of flexible material. Others watertight-closure elements may be flexible shileds or contactless rigid shields. The flexible shield ensures greater tightness of the bearing but with increased friction then the rigid screen. Preferably, the watertight-closure elements are placed between the two rings, in particular in the annular space and/or at the edges of the rings, more particularly mounted flush with the edges of the rings. So the retention of the lubricant increases, with a minimum increase in rotational friction of the seamer.

Preferably the seaming roller is integral with the ring having larger diameter while the ring with smaller diameter is integral with a support.

A second aspect of the invention relates to a seaming machine comprising the rolling seamer. The machine, especially if it comprises a rotating table with a plurality of peripheral rolling seamers, can produce cans with superior quality and reduced costs.

The advantages of the invention will be more apparent from the following description of a preferred embodiment of a rolling seamer, by referring to the attached drawing in which
Fig. 1 shows a known rolling seamer for cans;

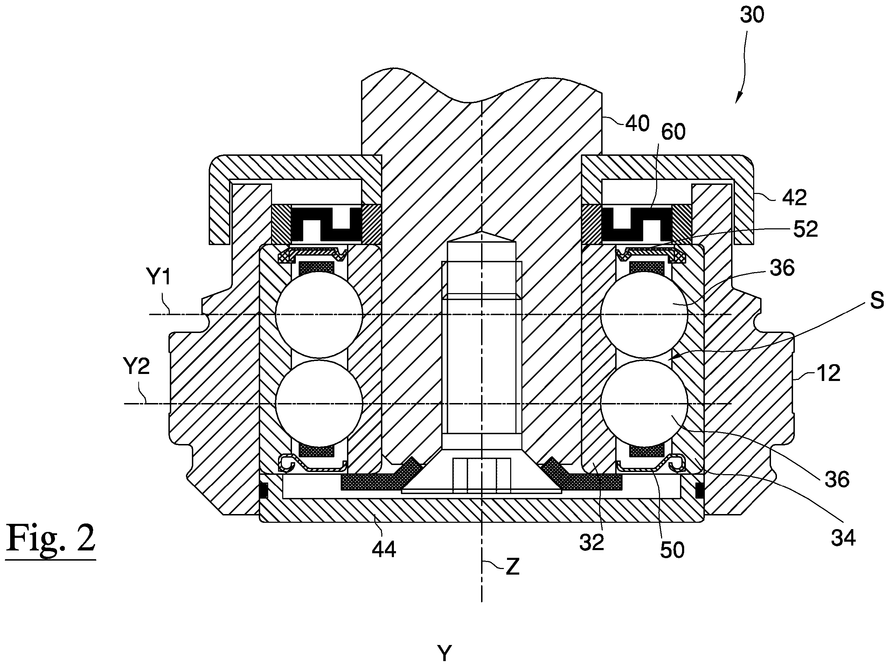

Fig. 2 shows a can rolling seamer according to the invention.

In the figures identical numbers indicate identical or conceptually similar parts, and terms such as vertical, horizontal, upper, etc., refer to the normal conditions of use.

A rolling seamer 30 is mounted on a support 40 of a seaming machine (not shown) for assembling the lid and the central body of a can or jar.

The seaming takes place in known manner by means of a seaming roller 12 mounted idle on a bearing so as to rotate about an axis Z. The Z axis is also the axis of symmetry for the rolling seamer 30.

The bearing is formed by two concentric rings 32, 34 which are coaxial to the Z axis. The ring 32 has a smaller diameter and is fixed to the support 40, while the ring 34, rotatable and outermost, is integral with the roller 12. The two concentric rings 32, 34 delimit an empty annular space or volume S in which there are two crowns of rolling balls 36. The balls of a crown have centers that lie on a plane Y1 and the balls of the other crown lie on a plane Y2. The planes Y1, Y2 are parallel to each other, not coincident and spaced apart, and orthogonal to the Z axis.

The space S containing the balls 36 is enclosed in a watertight manner, in correspondence of the edges of the rings 32, 34, by two optional lip seals 50, 52. Inside the volume S, grease is inserted to lubricate the bearing for life, without further maintenance. The seals 50, 52 prevent the leakage of grease from the bearing toward the seamed products, e.g. delicate as food.

The two crowns of balls 36 ensure high and long stability to the bearing, as well as a reduction of rolling friction for the entire bearing thereby increasing the final quality of the product.

The monolithic structure of the two rings 32, 34 ensures precision in operation and little need for post-installation adjustment.

The main barrier to the leakage of lubricant is represented by a labyrinth seal 60, preferably of the circular type, placed coaxially to the Z axis at two adjacent edges of the rings 32, 34. The seal 60 serves to enclose the annular space S acting as a bridge between said two edges. In particular, note for the seal 60 its location: astride two adjacent edges of the rings 32, 34 and outside the annular space comprised between the two rings 32, 34.

The seal 60 is e.g. formed by a pack of interdigitated lamellae, wherein a subset of the lamellae is integral with the ring 32 and the remaining lamellae with the other ring 34. Preferably the seal 60 is mounted directly on the edges of the rings 32, 34, i.e. with a subset of the lamellae integral with the edge of the ring 32 and the remaining lamellae with the edge of the other ring 34.

A seal of this type ensures a rotation with very low friction for the roller 12, which is likely to scratch and damage a can and if it loses too many rpms between the impact with a can and the next one.

A cap 44 encloses the entire bearing at the end of the support 40 remaining integral with the roller 12, while a flange 42 encloses at the opposite side the whole bearing overlying the seal 60.

A variant envisages to use rolling elements other than spheres, for example rollers, keeping everything else the same. The optimal solution is represented by the spheres because they combine a high load capacity to a very low rolling friction. However even if they exhibit higher friction, the rollers (conical, cylindrical or barrel-shaped) have greater load capacity than the spheres, therefore in some applications they might be preferable.

Another variant, of maximum constructive simplicity, envisages to eliminate the gaskets 50, 52 while leaving the grease seal to the gasket 60 and the lid 44. This variant is very advantageous because the sealing system is external to the bearing so as to ensure both a bearing's life equal to that of the roller 12 and very low rotational friction for the rolling seamer.

## Claims

1. Rolling seamer (30) for seaming cans or jars, comprising
a seaming roller (12) mounted on a bearing comprising two concentric rings (32, 34) relatively rotatable on rolling elements (36),
a cover (44) integral with the seaming roller to watertightly enclose one side of the bearing,
a gasket (60) mounted on the concentric rings for keeping watertight one side of the bearing opposite to the one closest to the cover,
lubricating fluid, for the rolling elements, permanently maintained between the cover and the gasket.

2. Seamer (30) according to claim 1, wherein said gasket comprises or consists of a labyrinth seal (60).

3. Seamer (30) according to claim 1 or 2, wherein said gasket is placed (i) astride two adjacent edges of the rings, and (ii) outside of the annular space comprised between the two rings.

4. Seamer (30) according to claim 1 or 2 or 3, wherein said gasket comprises two parts which are relatively movable and integral, respectively, with one ring.

5. Seamer (30) according to claim 1 or 2 or 3 or 4, wherein the gasket is constituted by a pack of interdigitated lamellae, wherein a subset of the lamellae is integral with one ring and the remaining ones with the other ring.

6. Seamer (30) according to any one of the preceding claims, wherein the bearing is constituted by or comprises
- two circular rings (32, 34) having
different diameter to delimit an annular space (S) between them and
center on a common axis (Z), and
- two crowns of balls (36) placed in the annular space (S) in contact with the rings,
the crowns having the center on the common axis (Z) and lying on distinct planes (Y 1, Y2) parallel to each other and orthogonal to the axis (Z).

7. Seamer (30) according to claim 6, wherein the annular space contains or is filled with grease.

8. Seamer (30) according to claim 7, wherein the annular space contains or is filled with alimentary grease.

9. Seamer (30) according to any one of the preceding claims, wherein the lubricating fluid is grease.

10. Seamer (30) according to claim 9, wherein the lubricating fluid is alimentary grease.

11. Seamer (30) according to any one of the preceding claims, comprising sealing lips of flexible material placed between the two rings in the annular space mounted flush with the edges of the rings.

12. Seamer (30) according to any one of the preceding claims, wherein the seaming roller is integral with the ring having larger diameter (34) while the ring with smaller diameter (32) is integral with a support (40).

13. Seaming machine for producing cans, comprising a rolling seamer according to any one of the preceding claims.

## Patentansprüche

1. Rollverschließer (30) zum Verschließen von Dosen oder Gläsern, bestehend aus
eine Falzrolle (12), die auf einem Lager mit zwei konzentrischen Ringen (32, 34) montiert ist, die auf Wälzkörpern (36) relativ drehbar sind,
eine mit der Falzrolle verbundene Abdeckung (44), um eine Seite des Lagers wasserdicht zu umschließen,
eine Dichtung (60), die auf den konzentrischen Ringen angebracht ist, um eine Seite des Lagers gegenüber der Seite, die dem Deckel am nächsten liegt, dicht zu halten,
Schmiermittel für die Wälzkörper, das ständig zwischen dem Deckel und der Dichtung gehalten wird.

2. Rollverschließer (30) nach Anspruch 1, wobei die Dichtung eine Labyrinthdichtung (60) umfasst oder aus einer solchen besteht.

3. Rollverschließer (30) nach Anspruch 1 oder 2, wobei die Dichtung (i) rittlings auf zwei benachbarten Kanten der Ringe und (ii) außerhalb des zwischen den beiden Ringen befindlichen Ringraums angeordnet ist.

4. Rollverschließer (30) nach Anspruch 1 oder 2 oder 3, **dadurch gekennzeichnet, dass** die Dichtung aus zwei Teilen besteht, die relativ zueinander beweglich sind und jeweils mit einem Ring verbunden sind.

5. Rollverschließer (30) nach Anspruch 1 oder 2 oder 3 oder 4, wobei die Dichtung aus einem Paket ineinandergreifender Lamellen besteht, wobei eine Teilmenge der Lamellen mit einem Ring und die übrigen mit dem anderen Ring verbunden sind.

6. Rollverschließer (30) nach einem der vorhergehenden Ansprüche, **dadurch gekennzeichnet, dass** das Lager gebildet wird durch oder umfasst
- zwei kreisförmige Ringe (32, 34)
mit unterschiedlichen Durchmessers, um einen Ringraum (S) zwischen ihnen abzugrenzen, und
Zentrum auf einer gemeinsamen Achse (Z), und
- zwei Kugelkränze (36), die im Ringraum (S) in Kontakt mit den Ringen stehen,
die Kronen haben ihren Mittelpunkt auf der gemeinsamen Achse (Z) und liegen auf verschiedenen Ebenen (Y1, Y2), die parallel zueinander und orthogonal zur Achse (Z) verlaufen.

7. Rollverschließer (30) nach Anspruch 6, wobei der Ringraum Fett enthält oder mit Fett gefüllt ist.

8. Rollverschließer (30) nach Anspruch 7, wobei der Ringraum Nahrungsfett enthält oder damit gefüllt ist.

9. Rollverschließer (30) nach einem der vorhergehenden Ansprüche, wobei die Schmierflüssigkeit ein Fett ist.

10. Rollverschließer (30) nach Anspruch 9, wobei die Schmierflüssigkeit ein Nahrungsfett ist.

11. Rollverschließer (30) nach einem der vorhergehenden Ansprüche, mit Dichtlippen aus flexiblem Material, die zwischen den beiden Ringen im Ringraum angeordnet und bündig mit den Rändern der Ringe angebracht sind.

12. Rollverschließer (30) nach einem der vorhergehenden Ansprüche, wobei die Verschließwalze mit dem Ring mit größerem Durchmesser (34) fest verbunden ist, während der Ring mit kleinerem Durchmesser (32) mit einem Träger (40) fest verbunden ist.

13. Verschließmaschine zur Herstellung von Dosen, mit einem Rollverschließer nach einem der vorhergehenden Ansprüche.

## Revendications

1. Rouleuse-soudeuse (30) pour le sertissage de boîtes ou de bocaux, comprenant
un rouleau de sertissage (12) monté sur un palier comprenant deux anneaux concentriques (32, 34) relativement rotatifs sur des éléments roulants (36),
un couvercle (44) intégré au rouleau de sertissage pour entourer de façon étanche un côté du palier,
un joint (60) monté sur les anneaux concentriques pour assurer l'étanchéité d'un côté du palier opposé à celui qui est le plus proche du couvercle,
fluide lubrifiant, pour les éléments roulants, maintenu en permanence entre le couvercle et le joint.

2. Rouleuse-soudeuse (30) selon la revendication 1, dans laquelle ledit joint comprend ou consiste en un joint labyrinthe (60).

3. Rouleuse-soudeuse (30) selon la revendication 1 ou 2, dans laquelle ledit joint est placé (i) à cheval sur deux bords adjacents des anneaux, et (ii) à l'extérieur de l'espace annulaire compris entre les deux anneaux.

4. Rouleuse-soudeuse (30) selon la revendication 1 ou 2 ou 3, dans laquelle ledit joint comprend deux parties relativement mobiles et solidaires, respectivement, d'une bague.

5. Rouleuse-soudeuse (30) selon la revendication 1 ou 2 ou 3 ou 4, dans laquelle le joint est constitué d'un paquet de lamelles interdigitées, un sous-ensemble de lamelles étant solidaire d'un anneau et les autres de l'autre anneau.

6. Rouleuse-soudeuse (30) selon l'une quelconque des revendications précédentes, dans laquelle le palier est constitué par ou comprend
- deux anneaux circulaires (32, 34) ayant
de diamètre différent pour délimiter un espace annulaire (S) entre eux et
centre sur un axe commun (Z), et
- deux couronnes de billes (36) placées dans l'espace annulaire (S) en contact avec les anneaux,
les couronnes ont leur centre sur l'axe commun (Z) et reposent sur des plans distincts (Y1, Y2) parallèles entre eux et orthogonaux à l'axe (Z).

7. Rouleuse-soudeuse (30) selon la revendication 6, dans lequel l'espace annulaire contient ou est rempli de graisse.

8. Rouleuse-soudeuse (30) selon la revendication 7, dans lequel l'espace annulaire contient ou est rempli de graisse alimentaire.

9. Rouleuse-soudeuse (30) selon l'une quelconque des revendications précédentes, dans laquelle le fluide lubrifiant est de la graisse.

10. Rouleuse-soudeuse (30) selon la revendication 9, dans lequel le fluide lubrifiant est de la graisse alimentaire.

11. Rouleuse-soudeuse (30) selon l'une quelconque des revendications précédentes, comportant des lèvres d'étanchéité en matériau souple placées entre les deux anneaux dans l'espace annulaire monté à fleur des bords des anneaux.

12. Rouleuse-soudeuse (30) selon l'une quelconque des revendications précédentes, dans laquelle le rouleau de sertissage est solidaire de l'anneau de plus grand diamètre (34) tandis que l'anneau de plus petit diamètre (32) est solidaire d'un support (40).

13. Machine à sertir pour la fabrication de boîtes de conserve, comprenant une rouleuse-soudeuse selon l'une quelconque des revendications précédentes.
